# EUROPEAN PATENT SPECIFICATION

(11) **EP 0 892 744 B1**
(45) Date of publication and mention of the grant of the patent: **07.06.2000**
(21) Application number: 97920211.6
(22) Date of filing: 08.04.1997
(51) Int. Cl.: B65D 65/46

(54) **WATER SOLUBLE BAG PACKAGING SYSTEM AND METHOD FOR PACKAGING**
VERPACKUNGSSYSTEM UNTER VERWENDUNG WASSERLÖSLICHER BEUTEL
SYSTEME D'EMBALLAGE EN SACHET SOLUBLE DANS L'EAU, ET PROCEDE D'EMBALLAGE

(30) Priority: 08.04.1996 US 629175
(43) Date of publication of application: 27.01.1999
(73) Proprietor: Novartis AG, 4058 Basel (CH); Chris-Craft Industrial Products, Inc., South Holland, IL 60473 (US)
(72) Inventor: DESMARAIS, Armand, Joseph, Valparaiso, IN 46383 (US); KNOOP, Henry, Earl, Valparaiso, IN 46383 (US); DULL, Lawrence, Clifford, Greensboro, NC 27406 (US); RAYMOND, Jean, Alain, F-34970 Lattes (FR)
(74) Representative: Becker, Konrad
(86) International application number: US9705776
(87) International publication number: WO9737903

(56) References cited:
- EP-A- 0 513 692
- WO-A-93/04120
- WO-A-94/29104
- WO-A-94/29188
- US-A- 3 322 674
- US-A- 3 661 695

## Description

The present invention relates to a multi-layer water soluble or dispersible packaging film and its use in packages for containing potentially hazardous organic chemicals. More particularly, the present invention relates to a water soluble or dispersible packaging system having a continuous film barrier on the interior portion of the package for containing agricultural chemicals having a tendency to adversely affect or otherwise be deleterious to the outer film portion of the water soluble or dispersible packaging system.

### Background of the Invention

Pesticides, such as herbicides, insecticides, fungicides and other types of agricultural chemicals (referred to herein as "agrichemicals") are often potentially harmful materials and are commonly made in concentrated form which can be as a solid, a liquid, a dispersion or a gel, for example. Such materials typically need to be diluted with water prior to use. Numerous other types of hazardous and toxic materials are also commonly sold and used on a commercial basis. Containers are needed for the aforementioned types of hazardous and toxic materials in order to conveniently distribute, sell and utilize such materials.

Typically, such containers are metal or blow molded plastic. However, there are hazards and difficulties in handling, storing and using such types of containers and materials. In addition, particularly with highly concentrated materials, hazards exist when such concentrates are diluted for use, such as when pouring the concentrate into a tank or other container. For example, the concentrated material can splash or spill in unintended locations, causing unintended human, animal or other contact with the concentrate.

In addition, disposal of the metal or plastic containers can be a problem since some residual concentrated material will remain in the original container. Thus, disposal of such containers can become an environmental problem.

It is known to package certain materials, including certain liquids in water soluble bags consisting of a layer of cold water soluble polyvinyl alcohol. Such packaging is disclosed in U.S. Patent No. 5,351,831, for example. EP-A-0 513 692 discloses a package for alkaline material such as detergents and comprises a water soluble outer layer and an inner layer protecting it against the content of the bag, which is soluble only in a basic aqueous medium. However, such packagings and similar types of packaging are not suitable for containing agrichemicals that deleteriously affect cold water soluble polyvinyl alcohol film, such as by chemical or physical reaction with it, including dissolving the cold water soluble film. Consequently, a need exists for a suitable cold water soluble or dispersible container that can contain agrichemicals and other materials that chemically, physically or otherwise deleteriously react with the water soluble film that forms the water soluble bag. In addition, a need exists for a cold water soluble or dispersible bag for storing such agrichemicals and other materials that is reliable and easy to produce.

### Summary of the Invention

In accordance with the present invention, a multi-layer cold water soluble or dispersible packaging film is provided which comprises: (I) a first "outer" continuous cold water soluble or dispersible film layer of sufficient thickness and strength for use as a package to contain chemicals, and (ii) a second "inner" continuous water soluble or dispersible film layer which is both chemically differentiated from and thinner than said first layer. The multi-layer film of the present invention is suitable for use as a package to contain potentially hazardous materials, particularly chemicals that dissolve water soluble film or chemically, physically or otherwise deleteriously react with or adversely affect water soluble film. The water soluble or dispersible packaging system prepared from the multi-layer film generally is conveniently in the form of a bag, a pouch or a sachet. Other conventional container configurations also are contemplated by the packaging system of the invention.

As used herein, the term "chemical" includes all types of potentially hazardous chemical materials, particularly organic chemicals including, but not limited to, agrichemicals. The term "agrichemicals" includes, for example, agronomically useful chemicals from the following classes: plant nutrients, plant growth regulators, plant protection agents such as pesticides (e.g., herbicides, insecticides, nematocides, acaricides, molluscicides, fungicides, etc.), activity promoters, penetrating agents, synergists, antidotes and safeners, activators, compatibility agents, and adjuvants. The term "agrichemicals" also includes agrichemical compositions (mixtures of one or more agrichemicals with any conventional agronomically acceptable carrier or diluent). The multi-layer film of the present invention can be used to make water soluble or dispersible packages that are suitable for containing chemicals such as agrichemicals or agrichemical compositions in the form of liquids, solids, or gels. Suitable liquids are, for example, in the form of dispersions, solutions, suspensions, emulsions and colloids. Solids are in the form of powders, granules and prills, for example. The term "cold water" means liquid water at a temperature of less than 50°C, preferably lower than 35°C, for example, between 5°C and 35°C. "Cold water soluble" means completely soluble in cold water. "Dispersible" means disintegration or dissipation as fine particles. Preferably, the dispersed particles are small enough to pass through the orifice of a conventional agrichemical spray apparatus or are filterable without plugging the spray orifice or filter of a conventional agrichemical sprayer. For example, particles having a mean particle size of from about 0.1 to about 250 microns as measured by the CIPAC MT176 test for dissolution capacity of water soluble sachets are considered to be dispersible for the purpose of the present invention. The term "substantially adversely affect" in the context of contact with cold water soluble film by an agrichemical material or other chemical material means that the material is not suitable for containment in a package made of the film because of any deleterious effect caused by contact of the material and the film, whether a chemical or physical reaction including, for example, dissolving the film by the material and unwanted physical leaching of film components into the material. In addition, the material stored in the package can affect the film material by, for example, physically altering the properties of the film such as extraction of plasticizer which makes the film brittle, making the film insoluble or otherwise unsuitable for use in packaging agrichemicals.

The multi-layer cold water soluble or dispersible film in accordance with one aspect of the invention includes a first outer continuous layer of cold water soluble film of sufficient thickness and strength to provide sufficient structural strength for use as a bag to contain liquid. Advantageously, the first or outer film layer may itself contain multiple layers of the same film type (such as co-extruded or tri-extruded cold water soluble films) as is known in the art. The multi-layer cold water soluble or dispersible film of the invention includes a second inner layer, chemically differentiated from the outer layer, which is an inner continuous or substantially continuous barrier layer of a material that can be cold water or hot water soluble or insoluble film securely adhered to and in intimate contact with the outer layer. The inner barrier film layer serves the purpose of preventing, impeding or otherwise reducing the interaction between the contents of a package made from the multi-layer film and the first outer film layer. In one embodiment, the inner barrier film layer is substantially continuous with the outer film layer such that the multi-layer film has edge or border areas which do not contain a barrier film layer to facilitate heat sealing or other sealing means.

When water insoluble or hot but not cold water soluble material is the barrier, the inner continuous layer of water insoluble film is frangible or otherwise lacks sufficient structural integrity to contain the chemical in a bag. Typically, the thickness of the first outer cold water soluble layer is much thicker than the second inner barrier layer. In one embodiment, the thickness ratio of the first outer layer to the second inner layer is from about 500:1 to about 2:1, preferably from about 400:1 to about 3:1. When a bag formed of the inventive multi-layer water soluble film is sealed with the chemical contained therein, once the water soluble film layer is dissolved, such as when the package is placed in water, the inner continuous barrier layer releases the chemical in the bag by dissolving or dispersing. This occurs because the outer water soluble structural layer has dissolved and the barrier or inner water insoluble layer is frangible or otherwise lacks sufficient structural integrity to remain intact and contain the agrichemical particularly when agitated in the spray tank of a conventional agrichemical sprayer. Preferably, as noted above, the barrier layer disperses or dissolves sufficiently to allow flushing into sanitation systems, passage through filters and spray nozzles.

Suitable materials for the first cold water soluble or dispersible film layer can be selected from a wide variety of materials including, for example, polyvinyl alcohol, polyoxyethylene or a combination thereof.

The second barrier film layer can be cold water soluble, hot water soluble or dispersible. In order to properly function as a barrier, the barrier material should be at least not as susceptible to interaction with the agrichemical or other material to be packaged as is the outer film layer.

In accordance with another aspect of the present invention, a water soluble or dispersible package (conveniently a bag) is provided that is suitable for containing agrichemicals and other chemicals which substantially adversely affect water soluble film. The bag is also useful for containing other types of chemicals. The water soluble or dispersible bag in accordance with the invention is formed from the aforesaid inventive multi-layer water soluble film. For example, the bag is formed by sealing two sheets of the multi-layer film together at the edge regions by means of an adhesive or heat seal.

In accordance with another aspect of the present invention, a water soluble or dispersible bag is provided for containing agrichemicals, the bag being particularly suitable for containing agrichemicals that substantially adversely affect cold water soluble film. The bag is composed of an outer layer of cold water soluble film and a continuous inner barrier film layer wherein the agrichemical composition does not substantially deleteriously affect the inner barrier film layer and the inner barrier film layer is capable of preventing or impeding the agrichemical composition when stored therein from contacting the outer cold water soluble film layer and wherein when the bag is placed in water with the agrichemical store therein, the water soluble film layer dissolves and the inner barrier layer dissolves or disperses into particles small enough to allow the agrichemical to disperse or dissolve into the water without clogging the spray system.

In accordance with still another aspect of the present invention, a water soluble bag packaging system is provided for containing and transporting chemicals, particularly agrichemicals, which substantially adversely affect cold water soluble film, including by chemical or physical reaction or otherwise. The packaging system includes a bag formed of the inventive multi-layer water soluble film having the inner continuous water insoluble film layer or barrier layer on the interior portion of the bag. The inner barrier layer prevents or impedes the agrichemical composition from contacting the water soluble film layer and when the packaging system is placed in water or other medium that dissolves the water-soluble film layer, the inner barrier layer, lacking sufficient structural integrity and strength to contain the agrichemical contained therein, releases the agrichemical. Consequently, dispersion into the water or other desire medium is provided.

In accordance with still another aspect of the present invention, a method of storing a liquid that chemically, physically or otherwise deleteriously reacts with cold water soluble film in a water soluble film is provided. The method includes forming a bag from a multi-layer water soluble film that is comprised of an outer continuous layer of water soluble film of sufficient thickness and strength to provide adequate structural strength and integrity for use as a bag to contain liquid and wherein the multi-layer water soluble film includes an inner continuous layer of a water insoluble film or water soluble film over the outer layer that is not dissolved by or otherwise is not substantially adversely affected by the chemical stored in the bag. The inner continuous layer lacks sufficient structural integrity to contain the liquid in the bag once the water soluble film layer is dissolved. The method further includes placing the liquid in the bag and thereafter sealing the bag with the liquid contained therein.

### Brief Description of the Drawings

FIG. 1 is a cross-sectional view of a water soluble film in accordance with the present invention;
FIG. 2 is a plan view of a bag containing an agrichemical and constructed from the film of FIG. 1; and
FIG. 3 is a cross-sectional view along lines 3-3 of FIG. 2.

### Detailed Description of the Invention

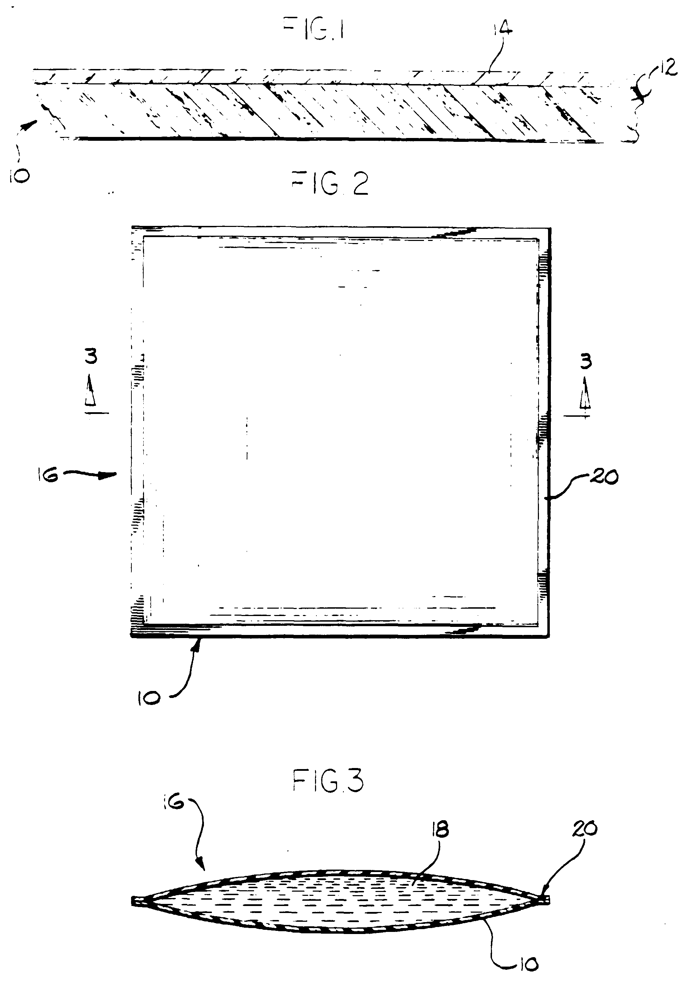

Referring the drawings generally and in particular to FIG. 1, there is shown a multi-layer water soluble film 10 composed of a relatively thick first layer 12 composed of a cold water soluble film and a relatively thin second or barrier film layer 14 that is a barrier layer for the chemical to be contained in a bag made from film 10.

Generally, layer 12 of the multi-layer water soluble or dispersible film 10 is relatively thick, sufficiently thick to provide the necessary structural strength for use as a bag to contain the desired chemical. Depending on the type of cold water soluble film, typical thicknesses will be in the range from about 10 to about 500 microns or greater, for example and more typically about 20 to about 75 microns. The actual thickness will be dependent on the type of application, including the type of water soluble material, the size of the bag and the density and amount of the material to be stored therein.

The thickness of second film layer 14 of barrier material is generally relatively thin, typically in the range of from about 0.25 to about 25 microns or more and preferably about .05 to about 15 microns. Generally, the purpose of second layer 14 is to provide a barrier so that chemicals contained in a bag formed from film 10 contacts barrier layer 14 and does not contact first layer 12 of cold water soluble film. In this manner, film barrier 14 is impervious or resistant to the chemical contained in the bag. Consequently, it is important that second layer 14 be continuous or at least substantially continuous for storing and containing certain chemicals that would be particularly aggressive in attacking the cold water soluble film of first layer 12. For aggressive agrichemicals, a continuous second layer 14 becomes more important or even necessary to properly function as a barrier between the agrichemical and first layer 12 composed of the cold water soluble film or dispersible.

FIGS. 2 and 3 illustrate a bag 16 in accordance with the present invention that has been sealed and contains an agrichemical 18 therein as shown in FIG. 3. Bag 16 is composed of a sheet of multi-layer water soluble film 10 that has been folded over and has a hot bar heat seal 20 along the four peripheral sides of bag 16, as best shown in FIG. 2.

As is well known to those skilled in the art, the equipment for and methods of making bag 16 are well known to those skilled in the art. Consequently, a detailed disclosure of such is not provided. Any bag design or construction can be utilized in accordance with the invention as long as the bag can be formed with multi-layer water soluble film 10 in a desired fashion, filled with an agrichemical and sealed closed with the material therein. Any suitable method of sealing the bag and type of seal can be utilized including hot bar, impulse or other heat seal, solution seal, adhesive seal and ultrasonic seal. Generally, a heat or a solution seal is preferred.

Many types of water soluble films are suitable for use as the first layer 12 of multi-layer film 10 in accordance with the invention. For example, suitable water soluble films include polyvinyl alcohol, polyoxyethylene, cellulose derivatives such as methylcellulose (MC), methylhydroxyethyl cellulose (MHEC), methylhydroxpropyl cellulose (MHPC), hydroxypropyl cellulose (HIPC), cellulose monoacetate, hydrophobically modified cellulose derivatives, sodium polyacrylate, polylactic acid, lactic acid ethers or esters of polyvinyl alcohol, lactic acid ethers or esters of cellulose derivatives, lactic acid grafts on polyvinyl alcohol, carrageenan, pectin, combinations of the foregoing and combinations of the foregoing and starch. For example, suitable hydrophobically modified cellulose derivatives include C-16 modified HEC, MHPC and HIPC. All of the foregoing materials can be cold water soluble.

Starch may be added and used in combination with the foregoing water soluble materials to make first layer 12. For example, suitable starches include unmodified or modified corn, potato, rice and wheat starches.

Suitable materials for the generally relatively thin barrier layer 14 generally can be selected from three categories: (1) cold water soluble, but with at least less reactivity or susceptibility to interaction with the agrichemical (or other material to be contained in the bag) than the outer layer; (2) hot water soluble; and (3) dispersible barriers. In addition, the barrier layer must have good adhesion properties to, and otherwise be compatible with, relatively thick first layer of water soluble film 12, and also be chemically and physically compatible with the material to be stored in the resulting container made with film 10.

In one embodiment, the barrier layer is a polymer present as a thin continuous layer that does not dissolve in water at temperatures above 50°C. Suitable polymers can be selected from cellulose derivatives in which the degree of substitution is sufficient to prevent solubility above 50°C such as, for example, cellulose acetate lactate, cellulose lactate, methylhydroxybutyl cellulose and hydrophobically modified cellulose derivatives.

In accordance with another embodiment, the inner layer or barrier 14 is a continuous, thin polymer layer that does not dissolve in water at temperatures below about 50 °C. Suitable materials for this embodiment include polyvinyl alcohol that does not dissolve in water at temperatures below 50°C, including between 97% and 99.99% hydrolyzed polyvinyl alcohol. Generally, such hot water soluble films will be utilized as a thin layer, usually from about 0.25 to about 15 microns thick, so that the barrier disintegrates once the outer cold water soluble film dissolves.

In still another embodiment of the present invention, barrier layer 14 can be composed of a polymer film material that dissolves in water but is less or substantially less reactive than the material of first or outer layer 12 of film 10 to the agricultural composition or other material to be contained within a bag constructed of such material. Generally, such barrier layers are not suitable for aqueous solutions containing free water. Generally, such barrier layers are suitable for packaging organic solvent-based materials and solids.

Generally, cold water soluble materials can be utilized for the inner barrier layer when the cold water soluble barrier material is not as susceptible to interaction with the agrichemical or material to be packaged as the material of the outer layer. For example, when the outer layer is cold water soluble polyvinyl alcohol, suitable cold water soluble materials, depending on the material to be packaged, include cellulose derivatives having a degree of substitution (DS) or moles of substitution (MS) that provide solubility in water in the range of 5-60°C or greater, such as methyl cellulose, methylhydroxyethyl cellulose, methylhydroxpropyl cellulose, methylethyl cellulose, methylhydroxybutyl cellulose, hydroxypropyl cellulose, carboxymethyl cellulose, hydrophobically modified cellulose derivatives, cellulose monoacetate, cellulose acetate lactate, cellulose lactate, karaya gum, guar gum, carrageenan, pectin, gum, tragacanth, sodium alginate, gum arabic, xanthan gum, sodium acrylate and ammonium acrylate.

In another embodiment, inner layer or barrier 14 can be selected so as to disperse or disintegrate in water, provided that it exhibits the proper resistance and other properties with respect to the agrichemical or other material to be contained in a bag constructed of such a film. Suitable materials for the inner barrier layer 14 for this embodiment include acrylic acid polymers, acrylic ester polymers, acrylic acid copolymers, acrylic ester copolymers, copolymers of acrylic acids and esters, crosslinked polyvinyl alcohols, crosslinked cellulose derivatives, ethyl cellulose, nitrocellulose, cellulose butyrate, cellulose acetate butyrate, ethylene vinyl alcohol, ethylene vinyl acetate, polyvinylidene chloride and alkali soluble waxes and polyurethanes.

Other materials may be known to those skilled in the art for barrier layer 14. Any suitable method of making multi-layer water soluble film 10 can be utilized. For example, the inner barrier layer can be laminated to the outer water soluble film layer in a manner well known to those skilled in the art. In addition, the inner layer can be co-extruded by a thermal process to the outer water soluble film layer, such as by blown film or slot die extrusion. Further, the inner barrier layer can be coated onto the outer water soluble film layer. Other suitable techniques of fabricating the multi-layer water soluble film 10 in accordance with the invention known in the art could also be utilized.

Some agrichemicals are generally unsuitable for storage in cold water soluble polyvinyl alcohol bags, namely CIBA HST.

### Examples

The following are examples of multi-layer film in accordance with the invention matched with agrichemicals and other materials to be contained by containers made from such film.

### EXAMPLE 1

Open-topped, heat sealed water soluble or disintegratable bags are produced from a two-layer film composed of a 38 micron outer cold water soluble polyvinyl alcohol (PVOH) (88% hydrolysis, 25 cps) layer and a 1.0 micron cold water dispersible polyvinylidene chloride barrier layer and are manually filled with from 10 grams to 2300 grams of a pesticide, which is not compatible with the outer cold water soluble PVOH layer, in the form of a wettable powder or water dispersible granule. In the absence of the barrier layer, this incompatibility would result in loss of desirable physical properties (puncture resistance, tear resistance, drop impact resistance, water solubility etc.) of the water soluble layer upon exposure to the pesticide. The pesticide composition of the wettable powder on a % by weight basis is 50% active ingredient, 3% wetting agent, 5% dispersant, and 42% diluent, where the wetting agent is typically an anionic surfactant such as alkyl sulfonate (e.g. sodium dodecylbenzenesulfonate) or an alkyl naphthalene sulfonate (e.g. sodium isopropyl naphthalene sulfonate); the dispersant is typically a sodium lignosulfonate; and the diluent is an inert inorganic material, such as a kaolinite clay, or an alkyl naphthalene sulfonate (e.g. sodium isopropyl naphthalene sulfonate); the dispersant is typically a sodium lignosulfonate; and the diluent is an inert inorganic material, such as a kaolinite clay, or an inert organic material such as starch.

The pesticide composition for a water dispersible granular composition on a % by weight basis is 35% active ingredient, 3% wetting agent, 7% dispersant, 1% bonder, and 54% diluent, where the wetting agent is typically an anionic surfactant such as alkyl aryl sulfonate (e.g. sodium dodecylbenzenesulfonate) or an alkyl naphthalene sulfonate); the dispersant is typically a sodium lignosulfonate; the binder is a water soluble polymer such as polyvinylpyrrolidone; and the diluent is an inert inorganic material such as a kaolinite clay or an inert organic material such as starch.

After the bags are filled, they are manually or automatically heat sealed at the top by the two sealing jaws of a thermoplastic bag hot bar heat sealer that heats the polymer under pressure until a heat seal is formed. The heat sealed bags are placed in a outer package which is suitable for storing the water soluble bags for acceptably long periods of time before being removed from the outer package and introduced into the main tank (typically 50 to 600 gallons in size) of a spraying system which has water residing in it. Tank agitation is started and in a reasonably short period of time the water soluble bags dissolve with disintegration of the barrier layer and the pesticide dissolves or disperses in the water, creating a spray solution which is then typically sprayed on a growing crop.

### EXAMPLE 2

Two layer water soluble bags are produced on a form-fill-seal machine and filled with a pesticide in the form of a flowable or emulsifiable concentrate or gel. These water soluble bags are produced from a two-layer film composed of a 50.8 micron outer cold water soluble polyvinyl alcohol layer having an 88% degree of hydrolysis and a viscosity of 23 cps. and a 0.7 micron layer of ethylene vinyl acetate. The flowable suspension concentrate composition on a % by weight basis is 40% pesticide active ingredient, 2% wetting agent, 3% dispersing agent, 5% antifreeze, 0.1% anti-foam, 0.2% thickening agent, and 49.7% water, where the wetting agent is typically a nonionic surfactant (e.g. polyalkoxylated nonylphenol); the dispersing agent is typically a sodium lignosulfonate; the antifreeze is a water soluble polyhydroxy material such as ethylene glycol or glycerin; the anti-foam is a poly(dimethylsiloxane); and the thickening agent is a polymeric organic material such as carboxymethycellulose.

The emulsifiable concentrate composition on a % by weight basis is 25% pesticide active ingredient, 8% emulsifier system, and 67% solvent, where the emulsifier system is a mixture of an anionic surfactant (e.g. calcium dodecylbenzenesulfonate) 3-4% and a nonionic surfactant (e.g. polyalkoxylated castor oil) 4-5%; and the solvent is typically a petroleum based aromatic solvent (which depending on the solubility characteristics of the active ingredient may be partially or wholly replaced by a more polar solvent such as an alcohol or a ketone).

The two-layer water soluble film in roll form is mounted to a form-fill-seal machine. The thickness of the outer cold water soluble polyvinyl alcohol layer of the film is typically 20 to 76 microns and the inner barrier of EVA is from 0.25 to 1.25 microns. The two-layer water soluble or dispersible film is formed into an open ended bag by conveying the film over a forming shoulder and heat sealing simultaneously with the bottom and side of the bag using hot bar or impulse sealing methods. The flowable or emulsifiable concentrate or gel product is then introduced into the open ended bag (typically in the range of 5 ml to 2000 ml). Each filled bag is heat sealed at the top following dispensing of the pesticide into the bag. Each bag is then loaded (either manually or automatically) into an outer package that is distributed and used as discussed in Example 1.

### EXAMPLES 3-13

Following procedures similar to those outlined in Examples 1-2, two layer bags are made from the following components:

| **Example** | **Cold Water Soluble Film** | **Thickness** | **Barrier Layer** | **Thickness** |
|---|---|---|---|---|
| 3 | Methylhydroxpropyl cellulose | 75 micron | PVDC | 1.0 micron |
| 4 | Methylhydroxpropyl cellulose | 75 micron | EVOH | 1.4 micron |
| 5 | Methylhydroxpropyl cellulose | 75 micron | alkali soluble acrylic | 2.0 micron |
| 6 | Methylhydroxpropyl cellulose | 75 micron | nitrocellulose | 1.0 micron |
| 7 | Polyethylene Oxide | 50 micron | PVOH, 99% Hydrolysis | 5 micron |
| 8 | Polyethylene Oxide | 50 micron | Acrylic acid/ester copolym | 1.5 micron |
| 9 | Carrageenan | 75 micron | Crosslinked MHPC | 5.0 micron |
| 10 | Cellulose monoacetate | 38 micron | Cellulose butyrate | 2.0 micron |
| 11 | Lactic acid grafts of PVOH | 38 micron | EVOH | 1.0 micron |
| 12 | PVOH, 88% Hydrolysis | 38 micron | MHPC | 25 micron |
| 13 | Pectin/Starch | 50 micron | polyurethane | 1.0 micron |

An example agrichemical formulation of wettable powder is by weight 50% active ingredient, 3% wetting agent, 5% dispersant, and 42% diluent, where the wetting agent is typically an anionic surfactant such as alkyl sulfonate (e.g. sodium dodecylbenzenesulfonate) or an alkyl naphthalene sulfonate (e.g. sodium ispropyl naphthalene sulfonate); the dispersant is typically a sodium lignosulfonate; and the diluent is an inert inorganic material, such as a kaolinite clay, or an inert organic material such as starch.

An example agrichemical formulation of water dispersible granule is by weight 35% active ingredient, 3% wetting agent 7% dispersant, 1% bonder, and 54% diluent, where the wetting agent is typically an anionic surfactant such as alkyl aryl sulfonate (e.g. sodium dodecyibenzenesulfonate) or an alkyl naphthalene sulfonate (e.g. sodium isopropyl naphthalene sulfonate); the dispersant is typically a sodium lignosulfonate; the binder is a water soluble polymer such as polyvinylpyrrolidone; and the diluent is an inert inorganic material such as a kaolinite clay or an inert organic material such as starch.

An example agrichemical formulation of flowable suspension concentrate is by weight 40% active ingredient, 2% wetting agent 3% dispersing agent, 5% antifreeze, 0.1% anti-foam, 0.2% thickening agent, and 49.7% water, where the wetting agent is typically an nonionic surfactant (e.g. polyalkoxylated nonylphenol); the dispersing agent is typically a sodium lignosulfonate; the antifreeze is a water soluble polyhydroxy material such as ethylene glycol or glycerin; the anti-foam is a poly(dimethylsiloxane); and the thickening agent is a polymeric organic material such as carboxymethyl cellulose.

An example agrichemical formulation of emulsifiable concentrate is by weight 25% active ingredient, 8% emulsifier system, and 67% solvent, where the emulsifier system is a mixture of an anionic surfactant (e.g. calcium dodecylbenzenesulfonate) 3-4% and a nonionic surfactant (e.g. polyalkoxylated castor oil) 4-5%; and the solvent is typically a petroleum based aromatic solvent (which depending on the solubility characteristics of the active ingredient may be partially or wholly replaced by a more polar solvent such as an alcohol or a ketone).

## Claims

1. A water soluble bag packaging system for transporting agrichemicals which chemically or physically react with water soluble films, said packaging system comprising a bag containing an agrichemical composition, said bag containing an outer cold-water-soluble film layer and an inner barrier layer which prevents the agrichemical composition from contacting the outer-cold water soluble film layer, and wherein, when the packaging system is placed in water and said water-soluble film layer dissolves, said inner barrier layer dissolves or disperses into particles small enough to allow the agrichemical to disperse into the water.

2. The packaging system of claim 1, wherein the outer cold-water-soluble film layer is a film selected from polyvinyl alcohol, 15 polyoxyethylene or a combination of the above.

3. The packaging system of claim 1, wherein the outer cold-water-soluble film layer is a film selected from the group consisting of polyvinyl alcohol, polyoxyethylene, cellulose derivatives such as methyl cellulose (MC), methylhydroxyethyl (MHEC), methylhydroxypropyl (MHPC), hydroxypropyl (HPC), cellulose, cellulose monoacetate, hydrophobically modified cellulose derivatives, sodium polyacrylate, polylactic acid, lactic acid ethers and esters of polyvinyl alcohol or cellulosics, carrageenan, pectin, combinations of the above, and combinations of the above with starches.

4. The packaging system of claim 1, wherein the agrichemical is selected from the group consisting of fertilizers and pesticides in the form of liquids, gels, dispersions, solutions, suspensions, emulsions, colloids, powders, granules or prills.

5. The packaging system of claim 4, wherein the pesticide is selected from the group consisting of herbicides, insecticides, and fungicides.

6. The packaging system of claim 1, wherein the agrichemical contains one or more components that dissolve, react deleteriously with, or otherwise adversely affect the outer cold water soluble film layer.

7. The packaging system of claim 1, wherein the inner barrier layer has a thickness between 0.25 microns and 25 microns.

8. The packaging system of claim 1, wherein the outer cold-water-soluble film layer has a thickness between about 12 microns and 200 microns.

9. The packaging system of claim 1, wherein the inner barrier layer is a polymer layer which does not dissolve in water at temperatures above 50°C.

10. The packaging system of claim 9, wherein the inner barrier layer is selected from the group consisting of cellulose derivatives in which the degree of substitution is sufficient to prevent solubility above 5°C selected from the group consisting of cellulose acetate lactate, cellulose lactate, methylhydroxybutyl cellulose, hydrophobically modified cellulose derivatives and combinations thereof.

11. The packaging system of claim 1, wherein the inner barrier layer is a polymer layer which does not dissolve in water at temperatures below 50°C.

12. The packaging system of claim 11, wherein the inner barrier layer is between 97 and 99.99% hydrolyzed polyvinyl alcohol.

13. The packaging system of claim 2, wherein the inner barrier layer is a polymer layer which dissolves in water but is less reactive than polyvinyl alcohol or polyoxyethylene to most of the agrichemical compositions being packaged.

14. The packaging system of claim 13, wherein the inner barrier layer is selected from the group consisting of cellulose derivatives which have a DS (degree of substitution) or MS (moles of substitution) that provides solubility in the range of 50°C and 60°C or broader such as methyl cellulose, methylhydroxyethyl cellulose, methylhydroxypropyl cellulose, methylethyl cellulose, methylhydroxybutyl cellulose, hydroxypropyl cellulose, carboxymethyl cellulose, hydrophobically modified cellulose derivatives, cellulose monoacetate, cellulose acetate lactate, cellulose lactate, karaya gum, guar gum, carrageenan, pectin, gum tragacanth, sodium alginate, gum arabic, and xanthan gum.

15. The packaging system of claim 1, wherein the inner barrier layer disintegrates in water.

16. The packaging system of claim 15, wherein the inner barrier layer which disintegrates in water is selected from the group consisting of soluble acrylic acid polymers, soluble acrylic ester polymers, soluble acrylic acid copolymers, soluble acrylic ester copolymers, soluble copolymers of acrylic acids and esters, crosslinked polyvinyl alcohols, crosslinked cellulose derivatives, ethyl cellulose, nitrocellulose, cellulose butyrate, cellulose acetate butyrate, ethylene vinyl alcohol, ethylene vinyl acetate, polyvinylidene chloride, alkali soluble waxes and polyurethanes.

17. The packaging system of claim 1, wherein the inner barrier layer is laminated to the outer water-soluble film layer.

18. The packaging system of claim 1, wherein the inner barrier is co-extruded with the outer water-soluble film layer.

19. The packaging system of claim 1, wherein the inner barrier is coated onto the outer water-soluble film layer.

20. A method of packaging an agrichemical which chemically or physically reacts with a cold water soluble film comprising:
forming a bag from a film comprising an outer layer of the cold water soluble film and an inner barrier layer that does not react with or become dissolved by the agrichemical, the inner barrier layer forming the bag interior and being dispersible or dissolvable in cold water upon dissolving of the cold water soluble layer;
adding a desired amount of the agrichemical into the bag; and
thereafter sealing the bag with the agrichemical contained therein, the barrier layer preventing the agrichemical composition from contacting the outer water soluble film layer.

21. The method of claim 20 wherein said barrier layer is cold water soluble.

22. The method of claim 20 wherein said barrier layer is cold water insoluble.

23. A multi-layer water soluble film, suitable for construction of a bag to contain liquid that adversely affects water soluble film comprising:
an outer continuous layer of cold-water-soluble film of sufficient thickness and strength to provide sufficient structural integrity to contain the liquid in a bag, and an inner continuous layer lacking sufficient structural integrity to contain the liquid once the outer soluble film layer is dissolved.

24. The film of claim 23 wherein said inner continuous layer does not dissolve in water above a temperature of 50°C and is selected from the group consisting of cellulose derivatives in which the degree of substitution is sufficient to prevent solubility above 50°C.

25. The film of claim 24 wherein said cellulose derivatives are selected from the group consisting of cellulose acetate lactate, cellulose lactate, methylhydroxybutyl cellulose and hydrophobically modified cellulose derivatives.

26. The film of claim 23 wherein said inner continuous layer does not dissolve in water at temperatures below 50°C.

27. The multi-layer water soluble film of claim 26 wherein the inner continuous layer is a polymer film that has been about 97% and 99.9% hydrolyzed polyvinyl alcohol.

28. The multi-layer water soluble film of claim 23 wherein the outer water soluble film layer has a thickness of between about 12 microns and 200 microns.

29. The multi-layer water soluble film of claim 23 wherein the inner layer has a thickness of between about 0.25 microns and 15 microns.

30. The multi-layer water soluble film of claim 23 wherein the outer cold-water-soluble film layer is selected from the group consisting of polyvinyl alcohol, polyoxyethylene and combinations thereof.

31. The multi-layer water soluble film of claim 23 wherein the outer cold-water soluble film layer is selected from the group consisting of methylcellulose, methylhydroxyethyl cellulose, methylhydroxpropyl cellulose, hydroxypropyl cellulose, cellulose, cellulose monoacetate, hydrophobically modified cellulose derivatives, sodium polyacrylate, polylactic acid, lactic acid ethers, polyvinyl alcohol esters, cellulose esters, carrageenan, pectin, combinations thereof and combinations thereof with starch.

32. A multi-layer water soluble film, suitable for construction of a bag to contain liquid therein comprising an outer continuous layer of cold water soluble film comprising polyvinyl alcohol; and
an inner continuous layer of a cold water soluble film, different than the outer continuous layer and selected from the group consisting of cellulose derivatives which have a degree of substitution that provides cold water solubility, the outer and inner layers providing sufficient structural strength to contain liquids when formed into a bag.

33. A water soluble bag for containing an agrichemical composition that substantially deleteriously affects cold water soluble film, said bag comprising an outer layer of the cold water soluble film and an inner barrier layer wherein said agrichemical composition does not react with or substantially deleteriously affect the inner barrier layer and the inner barrier layer is capable of preventing the agrichemical composition when stored therein from contacting the water soluble film layer, and wherein when the bag is placed in water with the agrichemical stored therein said water-soluble film layer dissolves and said inner barrier layer dissolves or disperses into particles small enough to allow the agrichemical to disperse into the water.

34. The bag of claim 33, wherein the cold water-soluble film layer is a film selected from the group consisting of polyvinyl alcohol, polyoxyethylene and combinations thereof.

35. The bag of claim 33, wherein the cold water-soluble film layer is a film selected from the group consisting of polyvinyl alcohol, polyoxyethylene, cellulose derivatives selected from the group consisting of methyl cellulose, methylhydroxyethyl cellulose, methylhydroxpropyl cellulose, hydroxypropyl cellulose, cellulose, cellulose monoacetate, hydrophobically modified cellulose derivatives, sodium polyacrylate, polylactic acid, lactic acid ethers polyvinyl alcohol esters, cellulose esters, carrageenan, pectin, combinations of the above, and combinations of the above with starch.

36. The bag of claim 33, wherein the inner barrier layer has a thickness between 0.25 microns and 15 microns.

37. The bag of claim 33, wherein the water-soluble film layer has a thickness between about 12 microns and 200 microns.

38. The bag of claim 33, wherein the inner barrier layer is a polymer film which does not dissolve in water at temperatures above 5°C.

39. The bag of claim 38, wherein the inner barrier layer is selected from the group consisting of cellulose derivatives in which the degree of substitution is sufficient to prevent solubility above 5°C such as cellulose acetate lactate, cellulose lactate, methylhydroxybutyl cellulose and hydrophobically modified cellulose derivatives.

40. The bag of claim 33, wherein the inner barrier layer is a polymer film which does not dissolve in water at temperatures below 50°C.

41. The bag of claim 40, wherein the inner barrier layer is between 97 and 99.99% hydrolyzed polyvinyl alcohol.

42. The bag of claim 34, wherein the inner barrier layer is a polymer layer which dissolves in water but is substantially less reactive than polyvinyl alcohol or polyoxyethylene relative to the agrichemical composition to be contained therein.

43. The bag of claim 42, wherein the inner barrier polymer layer which dissolves in water is less reactive than polyvinyl alcohol or polyoxyethylene to most of the agrichemical compositions is selected from the group consisting of cellulose derivatives which have a DS (degree of substitution) or MS (moles of substitution) that provides solubility in the range of about 5°C and about 60°C.

44. The bag of claim 43 wherein said inner barrier polymer layer cellulose derivative is selected from the group consisting of methylcellulose, methylhydroxyethyl cellulose, methylhydroxypropyl cellulose, methylethyl cellulose, methylhydroxybutyl cellulose, hydroxypropyl cellulose, carboxymethyl cellulose, hydrophobically modified cellulose derivatives, cellulose monoacetate, cellulose acetate lactate, cellulose lactate, karaya gum, guar gum, carrageenan, pectin, gum tragacanth, sodium alginate, gum arabic, xanthan gum and combinations thereof.

45. The packaging system of claim 33, wherein the inner barrier layer disintegrates in water.

46. The packaging system of claim 45, wherein the inner barrier layer which disintegrates in water is selected from the group consisting of soluble acrylic acid polymers, soluble acrylic ester polymers, soluble acrylic acid copolymers, soluble acrylic ester copolymers, soluble copolymers of acrylic acids and esters, crosslinked polyvinyl alcohols, crosslinked cellulose derivatives, ethyl cellulose, nitrocellulose, cellulose butyrate, cellulose acetate butyrate, ethylene vinyl alcohol, ethylene vinyl acetate, polyvinylidene chloride, alkali soluble waxes, and polyurethanes.

47. The packaging system of claim 33, wherein the inner barrier layer is laminated to the outer water-soluble film layer.

48. The packaging system of claim 33, wherein the inner barrier is co-extruded with the outer water-soluble film layer.

49. The packaging system of claim 33, wherein the inner barrier is coated onto the outer water-soluble film layer.

## Patentansprüche

1. Wasserlösliches Beutel-Verpackungssystem zum Transport von Agrochemikalien, die chemisch oder physikalisch mit wasserlöslichen Folien reagieren, wobei das Verpackungssystem einen eine agrochemische Zusammensetzung enthaltenden Beutel umfaßt, wobei der Beutel eine äußere, in kaltem Wasser lösliche Folienschicht und eine innere Barriereschicht, die einen Kontakt der agrochemischen Zusammensetzung mit der äußeren, in kaltem Wasser löslichen Folienschicht verhindert, aufweist und wobei dann, wenn das Verpackungssystem in Wasser gebracht wird und sich die in Wasser lösliche Folienschicht löst, die innere Barriereschicht gelöst oder zu so kleinen Teilchen dispergiert wird, daß das Dispergieren der Agrochemikalie im Wasser ermöglicht wird.

2. Verpackungssystem nach Anspruch 1, wobei es sich bei der äußeren, in kaltem Wasser löslichen Folienschicht um eine Folie handelt, die unter Polyvinylalkohol, 15-Polyoxyethylen oder einer Kombination dieser Bestandteile ausgewählt ist.

3. Verpackungssystem nach Anspruch 1, wobei es sich bei der äußeren, in kaltem Wasser löslichen Folienschicht um eine Folie handelt, die aus der Gruppe Polyvinylalkohol, Polyoxyethylen, Cellulosederivate, wie Methylcellulose (MC), Methylhydroxyethylcellulose (MHEC), Methylhydroxypropylcellulose (MHPC), Hydroxypropylcellulose (HPC), Cellulosemonoacetat, hydrophob modifizierte Cellulosederivate, Natriumpolyacrylat, Polymilchsäure, Milchsäureether und -ester von Polyvinylalkohol oder Cellulosen, Carrageenan, Pectin, Kombinationen der vorstehenden Bestandteile und Kombinationen der vorstehenden Bestandteile mit Stärken ausgewählt ist.

4. Verpackungssystem nach Anspruch 1, wobei die Agrochemikalie aus der Gruppe der Düngemittel und Pestizide in Form von Flüssigkeiten, Gelen, Dispersionen, Lösungen, Suspensionen, Emulsionen, Kolloiden, Pulvern, Granalien oder Prills ausgewählt ist.

5. Verpackungssystem nach Anspruch 4, wobei das Pestizid aus der Gruppe der Herbizide, Insektizide und Fungizide ausgewählt ist.

6. Verpackungssystem nach Anspruch 1, wobei die Agrochemikalie eine oder mehrere Komponenten enthält, die die äußere, in kaltem Wasser lösliche Folienschicht lösen, mit dieser in nachteiliger Weise reagieren oder anderweitig beeinträchtigen.

7. Verpackungssystem nach Anspruch 1, wobei die innere Barriereschicht eine Dicke von 0,25 bis 25 um aufweist.

8. Verpackungssystem nach Anspruch 1, wobei die äußere, in kaltem Wasser lösliche Folienschicht eine Dicke von etwa 12 bis 200 um aufweist.

9. Verpackungssystem nach Anspruch 1, wobei es sich bei der inneren Barriereschicht um eine polymere Schicht handelt, die sich in Wasser bei Temperaturen über 50°C nicht löst.

10. Verpackungssystem nach Anspruch 9, wobei die innere Barriereschicht aus der Gruppe der Cellulosederivate, bei denen der Substitutionsgrad zur Verhinderung einer Löslichkeit über 5°C ausreicht, ausgewählt ist und wobei diese Cellulosederivate aus der Gruppe Celluloseacetolactat, Celluloselactat, Methylhydroxybutylcellulose, hydrophob modifizierte Cellulosederivate und Kombinationen davon ausgewählt ist.

11. Verpackungssystem nach Anspruch 1, wobei es sich bei der inneren Barriereschicht um eine polymere Schicht handelt, die sich in Wasser bei Temperaturen unter 50°C nicht löst.

12. Verpackungssystem nach Anspruch 11, wobei es sich bei der inneren Barriereschicht um Polyvinylalkohol mit einem Hydrolysegrad von 97 bis 99,99% handelt.

13. Verpackungssystem nach Anspruch 2, wobei es sich bei der inneren Barriereschicht um eine polymere Schicht handelt, die sich in Wasser löst, aber gegenüber den meisten verpackten agrochemischen Zusammensetzungen weniger reaktiv als Polyvinylalkohol oder Polyoxyethylen ist.

14. Verpackungssystem nach Anspruch 13, wobei die innere Barriereschicht aus der Gruppe der Cellulosederivate, die einen Substitutionsgrad (DS) oder eine Molzahl der Substitution (MS) aufweisen, die eine Löslichkeit im Bereich von 50 und 60°C oder einem breiteren Bereich ergeben, ausgewählt ist, wie Methylcellulose, Methylhydroxyethylcellulose, Methylhydroxypropylcellulose, Methylethylcellulose, Methylhydroxybutylcellulose, Hydroxypropylcellulose, Carboxymethylcellulose, hydrophob modifizierte Cellulosederivate, Cellulosemonoacetat, Celluloseacetolactat, Celluloselactat, Karayagummi, Guarmehl, Carrageenan, Pectin, Traganthgummi, Natriumalginat, Gummi arabicum und Xanthangummi.

15. Verpackungssystem nach Anspruch 1, wobei die innere Barriereschicht in Wasser zerfällt.

16. Verpackungssystem nach Anspruch 15, wobei die innere Barriereschicht, die in Wasser zerfällt, aus folgender Gruppe ausgewählt ist: lösliche Acrylsäure-Polymere, lösliche Acrylester-Polymere, lösliche Acrylsäure-Copolymere, lösliche Acrylester-Copolymere, lösliche Copolymere aus Acrylsäuren und -estern, vernetzte Polyvinylalkohole, vernetzte Cellulosederivate, Ethylcellulose, Nitrocellulose, Cellulosebutyrat, Celluloseacetobutyrat, Ethylen-Vinylalkohol, Ethylen-Vinylacetat, Polyvinylidenchlorid, alkalilösliche Wachse und Polyurethane.

17. Verpackungssystem nach Anspruch 1, wobei die innere Barriereschicht auf die äußere, wasserlösliche Folienschicht laminiert ist.

18. Verpackungssystem nach Anspruch 1, wobei die innere Barriere mit der äußeren, wasserlöslichen Folienschicht coextrudiert ist.

19. Verpackungssystem nach Anspruch 1, wobei die innere Barriere schichtförmig auf die äußere, wasserlösliche Folienschicht aufgebracht ist.

20. Verfahren zum Verpacken einer Agrochemikalie, die chemisch oder physikalisch mit einer in kaltem Wasser löslichen Folie reagiert, umfassend:
das Formen eines Beutels aus einer Folie, die eine äußere Schicht aus der in kaltem Wasser löslichen Folie und eine innere Barriereschicht, die nicht mit der Agrochemikalie reagiert oder von dieser gelöst wird, umfaßt, wobei die innere Barriereschicht das Beutelinnere bildet und beim Auflösen der in kaltem Wasser löslichen Schicht in kaltem Wasser dispergierbar oder lösbar ist;
das Zugeben einer gewünschten Menge der Agrochemikalie in den Beutel; und
anschließend das Siegeln des Beutels mit der darin enthaltenen Agrochemikalie, wobei die Barriereschicht verhindert, daß die agrochemische Zusammensetzung in Kontakt mit der äußeren wasserlöslichen Folienschicht kommt.

21. Verfahren nach Anspruch 20, wobei die Barriereschicht in kaltem Wasser löslich ist.

22. Verfahren nach Anspruch 20, wobei die Barriereschicht in kaltem Wasser unlöslich ist.

23. Mehrschichtige, wasserlösliche Folie, geeignet zur Bildung eines Beutels, der eine Flüssigkeit enthält, die eine wasserlösliche Folie beeinträchtigt, umfassend:
eine äußere kontinuierliche Schicht aus einer in kaltem Wasser löslichen Folie von ausreichender Dicke und Festigkeit, um einen ausreichenden strukturellen Zusammenhalt zur Aufnahme der Flüssigkeit in einem Beutel zu gewährleisten, und eine innere kontinuierliche Schicht, der es an einem ausreichenden strukturellen Zusammenhalt zur Aufnahme der Flüssigkeit fehlt, nachdem die äußere Folienschicht aufgelöst ist.

24. Folie nach Anspruch 23, wobei die innere kontinuierliche Schicht sich in Wasser bei einer Temperatur über 50°C nicht löst und aus der Gruppe der Cellulosederivate, bei denen der Substitutionsgrad zur Verhinderung einer Löslichkeit über 50°C ausreicht, ausgewählt ist.

25. Folie nach Anspruch 24, wobei die Cellulosederivate aus der Gruppe Celluloseacetolactat, Celluloselactat, Methylhydroxybutylcellulose und hydrophob modifizierte Cellulosederivate ausgewählt ist.

26. Folie nach Anspruch 23, wobei die innere kontinuierliche Schicht sich in Wasser bei Temperaturen unter 50°C nicht löst.

27. Mehrschichtige, wasserlösliche Folie nach Anspruch 26, wobei es sich bei der inneren kontinuierlichen Schicht um eine polymere Folie aus Polyvinylalkohol, der zu etwa 97 bis 99,9% hydrolysiert ist, handelt.

28. Mehrschichtige, wasserlösliche Folie nach Anspruch 23, wobei die äußere wasserlösliche Folienschicht eine Dicke von etwa 12 um bis 200 um aufweist.

29. Mehrschichtige, wasserlösliche Folie nach Anspruch 23, wobei die innere Schicht eine Dicke von etwa 0,25 µm bis 15 um aufweist.

30. Mehrschichtige, wasserlösliche Folie nach Anspruch 23, wobei die äußere, in kaltem Wasser lösliche Folienschicht aus der Gruppe Polyvinylalkohol, Polyoxyethylen und Kombinationen davon ausgewählt ist.

31. Mehrschichtige, wasserlösliche Folie nach Anspruch 23, wobei die äußere, in kaltem Wasser lösliche Folienschicht aus folgender Gruppe ausgewählt ist: Methylcellulose, Methylhydroxyethylcellulose, Methylhydroxypropylcellulose, Hydroxypropylcellulose, Cellulose, Cellulosemonoacetat, hydrophob modifizierte Cellulosederivate, Natriumpolyacrylat, Polymilchsäure, Milchsäureether, Polyvinylalkoholester, Celluloseester, Carrageenan, Pectin, Kombinationen davon und Kombinationen dieser Bestandteile mit Stärke.

32. Mehrschichtige, wasserlösliche Folie, die sich zur Bildung eines Beutels zur Aufnahme einer Flüssigkeit eignet, umfassend eine äußere kontinuierliche Schicht aus einer in kaltem Wasser löslichen Folie, die Polyvinylalkohol umfaßt; und
eine innere kontinuierliche Schicht aus einer in kaltem Wasser löslichen Folie, die sich von der äußeren kontinuierlichen Schicht unterscheidet und aus der Gruppe der Cellulosederivate, die einen Substitutionsgrad aufweisen, der eine Löslichkeit in kaltem Wasser gewährleistet, ausgewählt ist, wobei die äußere und die innere Schicht eine ausreichende strukturelle Festigkeit gewährleisten, um bei Bildung eines Beutels Flüssigkeiten aufzunehmen.

33. Wasserlöslicher Beutel zur Aufnahme einer agrochemischen Zusammensetzung, die eine in kaltem Wasser lösliche Folie erheblich beeinträchtigt, wobei der Beutel eine äußere Schicht aus der in kaltem Wasser löslichen Folie und eine innere Barriereschicht umfaßt, wobei die agrochemische Zusammensetzung mit der inneren Barriereschicht nicht reagiert oder diese nicht erheblich beeinträchtigt und die innere Barriereschicht dazu in der Lage ist, einen Kontakt der darin aufbewahrten agrochemischen Zusammensetzung mit der wasserlöslichen Folienschicht zu verhindern, und wobei dann, wenn der Beutel zusammen mit der darin aufbewahrten Agrochemikalie in Wasser gebracht wird, sich die wasserlösliche Folienschicht löst und die innere Barriereschicht sich löst oder zu ausreichend kleinen Teilchen dispergiert wird, so daß die Agrochemikalie im Wasser dispergiert wird.

34. Beutel nach Anspruch 33, wobei es sich bei der in kaltem Wasser löslichen Folienschicht um eine Folie aus einem Material aus der Gruppe Polyvinylalkohol, Polyoxyethylen und Kombinationen davon handelt.

35. Beutel nach Anspruch 33, wobei es sich bei der in kaltem Wasser löslichen Folienschicht um eine Folie aus einem Material aus folgender Gruppe handelt: Polyvinylalkohol, Polyoxyethylen, Cellulosederivate, die aus der Gruppe Methylcellulose, Methylhydroxyethylcellulose, Methylhydroxypropylcellulose, Hydroxypropylcellulose, Cellulose, Cellulosemonoacetat, hydrophob modifizierte Cellulosederivate, Natriumpolyacrylat, Polymilchsäure, Milchsäureether, Polyvinylalkoholester, Celluloseester, Carrageenan, Pectin, Kombinationen davon und Kombinationen der vorstehenden Bestandteile mit Stärke ausgewählt sind.

36. Beutel nach Anspruch 33, wobei die innere Barriereschicht eine Dicke von 0,25 bis 15 µm aufweist.

37. Beutel nach Anspruch 33, wobei die in Wasser lösliche Folienschicht eine Dicke von etwa 12 bis 200 um aufweist.

38. Beutel nach Anspruch 33, wobei es sich bei der inneren Barriereschicht um eine polymere Folie handelt, die sich in Wasser bei Temperaturen über 5°C nicht löst.

39. Beutel nach Anspruch 38, wobei die innere Barriereschicht aus der Gruppe der Cellulosederivate, bei denen der Substitutionsgrad ausreicht, um eine Löslichkeit bei einer Temperatur über 5°C zu verhindern, ausgewählt ist, z. B. Celluloseacetolactat, Celluloselactat, Methylhydroxybutylcellulose und hydrophob modifizierte Cellulosederivate.

40. Beutel nach Anspruch 33, wobei es sich bei der inneren Barriereschicht um eine polymere Folie handelt, die sich in Wasser bei Temperaturen unter 50°C nicht löst.

41. Beutel nach Anspruch 40, wobei es sich bei der inneren Barriereschicht um Polyvinylalkohol, der zu 97 bis 99,99% hydrolysiert ist, handelt.

42. Beutel nach Anspruch 34, wobei es sich bei der inneren Barriereschicht um eine polymere Schicht handelt, die sich in Wasser löst, aber mit der darin enthaltenen agrochemischen Zusammensetzung wesentlich weniger reaktiv ist als Polyvinylalkohol oder Polyoxyethylen.

43. Beutel nach Anspruch 42, wobei die innere polymere Barriereschicht, die sich in Wasser löst, gegenüber den agrochemischen Zusammensetzungen weniger reaktiv als Polyvinylalkohol oder Polyoxyethylen ist und aus der Gruppe der Cellulosederivate, die einen Substitutionsgrad (DS) oder eine Molzahl der Substitution (MS) aufweisen, die eine Löslichkeit im Bereich von etwa 5 bis etwa 60°C gewährleistet, ausgewählt ist.

44. Beutel nach Anspruch 43, wobei das Cellulosederivat der inneren polymeren Barriereschicht aus folgender Gruppe ausgewählt ist: Methylcellulose, Methylhydroxyethylcellulose, Methylhydroxypropylcellulose, Methylethylcellulose, Methylhydroxybutylcellulose, Hydroxypropylcellulose, Carboxymethylcellulose, hydrophob modifizierte Cellulosederivate, Cellulosemonoacetat, Celluloseacetolactat, Celluloselactat, Karayagummi, Guarmehl, Carrageenan, Pectin, Traganthgummi, Natriumalginat, Gummi arabicum, Xanthangummi und Kombinationen davon.

45. Verpackungssystem nach Anspruch 33, wobei die innere Barriereschicht in Wasser zerfällt.

46. Verpackungssystem nach Anspruch 45, wobei die innere Barriereschicht, die in Wasser zerfällt, aus folgender Gruppe ausgewählt ist: lösliche Acrylsäure-Polymere, lösliche Acrylester-Polymere, lösliche Acrylsäure-Copolymere, lösliche Acrylester-Copolymere, lösliche Copolymere von Acrylsäure und -estern, vernetzte Polyvinylalkohole, vernetzte Cellulosederivate, Ethylcellulose, Nitrocellulose, Cellulosebutyrat, Celluloseacetobutyrat, Ethylen-Vinylalkohol, Ethylen-Vinylacetat, Polyvinylidenchlorid, alkalilösliche Wachse und Polyurethane.

47. Verpackungssystem nach Anspruch 33, wobei die innere Barriereschicht auf die äußere wasserlösliche Folienschicht laminiert ist.

48. Verpackungssystem nach Anspruch 33, wobei die innere Barriere mit der äußeren wasserlöslichen Folienschicht koextrudiert ist.

49. Verpackungssystem nach Anspruch 33, wobei die innere Barriere schichtförmig auf die äußere wasserlösliche Folienschicht aufgebracht ist.

## Revendications

1. Système d'emballage en sachet soluble dans l'eau pour transporter des produits agrochimiques qui réagissent chimiquement ou physiquement avec des films solubles dans l'eau, ledit système d'emballage comprenant un sachet contenant une composition de produit agrochimique, ledit sachet comprenant une couche de film externe soluble dans l'eau froide et une couche barrière interne qui empêche la composition de produit agrochimique de venir au contact de la couche de film externe soluble dans l'eau froide et dans lequel, lorsque le système d'emballage est placé dans l'eau et que ladite couche de film soluble dans l'eau se dissout, ladite couche barrière interne se dissout ou se disperse selon des particules suffisamment petites pour permettre au produit agrochimique de se disperser dans l'eau.

2. Système d'emballage selon la revendication 1, dans lequel la couche de film externe soluble dans l'eau froide est un film choisi parmi l'alcool polyvinylique, le polyoxyéthylène ou une combinaison de ceux-ci.

3. Système d'emballage selon la revendication 1, dans lequel la couche de film externe soluble dans l'eau froide est un film choisi parmi le groupe comprenant l'alcool polyvinylique, le polyoxyéthylène, les dérivés de cellulose comme la méthyl-cellulose (MC), la méthylhydroxyéthylcellulose (MHEC), la méthylhydroxypropyl-cellulose (MHPC), l'hydroxypropyl-cellulose (HPC), le monoacétate de cellulose, les dérivés de cellulose modifiés de façon hydrophobe, le polyacrylate de sodium, l'acide polylactique, les éthers d'acide lactique et les esters d'alcool polyvinylique ou de composés cellulosiques, le carragheen, la pectine, des combinaisons de ceux-ci et des combinaisons de ceux-ci avec des amidons.

4. Système d'emballage selon la revendication 1, dans lequel le produit agrochimique est choisi parmi le groupe comprenant les fertilisants et les pesticides sous la forme de liquides, de gels, de dispersions, de solutions, de suspensions, d'émulsions, de colloïdes, de poudres, de granules ou de pastilles.

5. Système d'emballage selon la revendication 4, dans lequel le pesticide est choisi parmi le groupe comprenant les herbicides, les insecticides et les fongicides.

6. Système d'emballage selon la revendication 1, dans lequel le produit agrochimique renferme un ou plusieurs composants qui se dissolvent, réagissent de façon nuisible ou affectent autrement de façon nuisible la couche de film externe soluble dans l'eau froide.

7. Système d'emballage selon la revendication 1, dans lequel la couche barrière interne a une épaisseur comprise entre 0,25 micron et 25 microns.

8. Système d'emballage selon la revendication 1, dans lequel la couche de film externe soluble dans l'eau froide a une épaisseur comprise entre environ 12 microns et 200 microns.

9. Système d'emballage selon la revendication 1, dans lequel la couche barrière interne est une couche de polymère qui ne se dissout pas dans l'eau à des températures supérieures à 50°C.

10. Système d'emballage selon la revendication 9, dans lequel la couche barrière interne est choisie parmi le groupe comprenant les dérivés de cellulose dans lesquels le degré de substitution est suffisant pour empêcher une solubilité au-dessus de 5°C choisis parmi le groupe comprenant l'acétate-lactate de cellulose, le lactate de cellulose, la méthylhydroxybutyl-cellulose, les dérivés de cellulose modifiés de façon hydrophobe et leurs combinaisons.

11. Système d'emballage selon la revendication 1, dans lequel la couche barrière interne est une couche de polymère qui ne se dissout pas dans l'eau à des températures inférieures à 50°C.

12. Système d'emballage selon la revendication 11, dans lequel la couche barrière interne comprend entre 97 et 99,9 % d'alcool polyvinylique hydrolysé.

13. Système d'emballage selon la revendication 2, dans lequel la couche barrière interne est une couche de polymère qui se dissout dans l'eau mais est moins réactive que l'alcool polyvinylique ou le polyoxyéthylène à la plupart des compositions agrochimiques conditionnées.

14. Système d'emballage selon la revendication 13, dans lequel la couche barrière interne est choisie parmi le groupe comprenant les dérivés de cellulose qui ont un degré de substitution (DS) ou des moles de substitution (MS) fournissant une solubilité dans la gamme de 50°C et 60°C ou plus large comme la méthyl-cellulose, la méthylhydroxyéthyl-cellulose, la méthylhydroxypropyl-cellulose, la méthyléthyl-cellulose, la méthylhydroxybutyl-cellulose, l'hydroxypropyl-cellulose, la carboxyméthylcellulose, les dérivés de cellulose modifiés de façon hydrophobe, le monoacétate de cellulose, l'acétate-lactate de cellulose, le lactate de cellulose, la gomme de karaya, la gomme de guar, le carragheen, la pectine, la gomme adraganthe, l'alginate de sodium, la gomme arabique et la gomme de xanthane.

15. Système d'emballage selon la revendication 1, dans lequel la couche barrière interne se désintègre dans l'eau.

16. Système d'emballage selon la revendication 15, dans lequel la couche barrière interne qui se désintègre dans l'eau est choisie parmi le groupe comprenant les polymères d'acides acryliques solubles, les polymères d'esters acryliques solubles, les copolymères d'acides acryliques solubles, les copolymères d'esters acryliques solubles, les copolymères solubles d'acides acryliques et d'esters, les alcools polyvinyliques réticulés, les dérivés de cellulose réticulés, l'éthyl-cellulose, la nitrocellulose, le butyrate de cellulose, l'acétate-butyrate de cellulose, les dérivés d'éthylène - alcool vinylique, d'éthylène - acétate de vinyle, le chlorure de polyvinylidène, les cires solubles dans les alcalis et les polyuréthanes.

17. Système d'emballage selon la revendication 1, dans lequel la couche barrière interne est stratifiée à la couche de film externe soluble dans l'eau.

18. Système d'emballage selon la revendication 1, dans lequel la couche barrière interne est coextrudée avec la couche de film externe soluble dans l'eau.

19. Système d'emballage selon la revendication 1, dans lequel la couche barrière interne est enrobée sur la couche de film externe soluble dans l'eau.

20. Procédé d'emballage d'un produit agrochimique qui réagit chimiquement ou physiquement avec un film soluble dans l'eau froide, caractérisé en ce qu'il comprend les étapes consistant à :
former un sachet à partir d'un film comprenant une couche externe du film soluble dans l'eau froide et une couche barrière interne qui ne réagit pas ou n'est pas dissoute par le produit agrochimique, la couche barrière interne formant le sachet intérieur et étant apte à être dispersée ou dissoute dans l'eau froide lors de la dissolution de la couche soluble dans l'eau froide ;
ajouter une quantité désirée du produit agrochimique dans le sachet ; et
étanchéifier subséquemment le sachet avec le produit agrochimique contenu dans celui-ci, la couche barrière empêchant la composition agrochimique de venir au contact de la couche de film externe soluble dans l'eau.

21. Procédé selon la revendication 20, dans lequel ladite couche barrière est soluble dans l'eau froide.

22. Procédé selon la revendication 20, dans lequel la couche barrière est insoluble dans l'eau froide.

23. Film soluble dans l'eau, multicouche, approprié pour la réalisation d'un sachet destiné à contenir un liquide qui affecte de façon nuisible le film soluble dans l'eau comprenant :
une couche externe continue de film soluble dans l'eau froide d'une épaisseur et d'une résistance suffisantes pour fournir une intégrité structurelle suffisante pour contenir le liquide dans un sachet et une couche continue interne manquant d'intégrité structurelle suffisante pour contenir le liquide une fois que la couche de film externe soluble a été dissoute.

24. Film selon la revendication 23, dans lequel ladite couche continue interne ne se dissout pas dans l'eau à une température au-dessus de 50°C et est choisie parmi le groupe comprenant les dérivés de cellulose dans lesquels le degré de substitution est suffisant pour empêcher une solubilité au-dessus de 50°C.

25. Film selon la revendication 24, dans lequel lesdits dérivés de cellulose sont choisis parmi le groupe comprenant l'acétate-lactate de cellulose, le lactate de cellulose, la méthylhydroxybutyl-cellulose et les dérivés de cellulose modifiés de façon hydrophobe.

26. Film selon la revendication 23, dans lequel ladite couche continue interne ne se dissout pas dans l'eau à des températures inférieures à 50°C.

27. Film soluble dans l'eau multicouche selon la revendication 26, dans lequel la couche continue interne est un film de polymère qui comprend environ 97 % à 99,9 % d'alcool polyvinylique hydrolysé.

28. Film soluble dans l'eau multicouche selon la revendication 23, dans lequel la couche de film soluble dans l'eau externe a une épaisseur comprise entre environ 12 microns et 200 microns.

29. Film soluble dans l'eau multicouche selon la revendication 23, dans lequel la couche interne a une épaisseur comprise entre environ 0,25 micron et 15 microns.

30. Film soluble dans l'eau multicouche selon la revendication 23, dans lequel la couche de film externe soluble dans l'eau froide est choisie parmi le groupe comprenant l'alcool polyvinylique, le polyoxyéthylène et leurs combinaisons.

31. Film soluble dans l'eau multicouche selon la revendication 23, dans lequel la couche de film externe soluble dans l'eau froide est choisie parmi le groupe comprenant la méthyl-cellulose, la méthylhydroxyéthylcellulose, la méthylhydroxypropyl-cellulose, l'hydroxypropyl-cellulose, la cellulose, le monoacétate de cellulose, les dérivés de cellulose modifiés de façon hydrophobe, le polyacrylate de sodium, l'acide polylactique, les éthers d'acide lactique, les esters d'alcool polyvinylique, les esters de cellulose, le carragheen, la pectine, des combinaisons de ceux-ci et des combinaisons de ceux-ci avec de l'amidon.

32. Un film soluble dans l'eau multicouche approprié pour la réalisation d'un sachet destiné à contenir un liquide comprenant une couche continue externe de film soluble dans l'eau froide comprenant de l'alcool polyvinylique ; et
une couche continue interne d'un film soluble dans l'eau froide différent de la couche continue externe et choisi parmi le groupe comprenant les dérivés de cellulose qui ont un degré de substitution fournissant une solubilité dans l'eau froide, les couches externe et interne fournissant une résistance structurelle suffisante pour contenir les liquides lorsqu'elles sont formées selon un sachet.

33. Sachet soluble dans l'eau contenant une composition agrochimique qui affecte essentiellement de façon nuisible le film soluble dans l'eau froide, ledit sachet comprenant une couche externe du film soluble dans l'eau froide et une couche barrière interne où ladite composition agrochimique ne réagit pas ou n'affecte pas essentiellement de façon nuisible la couche barrière interne et la couche barrière interne est capable d'empêcher la composition agrochimique lorsqu'elle est emmagasinée dans celle-ci de venir au contact de la couche de film soluble dans l'eau et dans lequel, lorsque le sachet est placé dans l'eau avec la composition agrochimique emmagasinée dans celui-ci, ladite couche de film soluble dans l'eau se dissout et ladite couche barrière interne se dissout ou se disperse selon des particules suffisamment petites pour permettre à la composition agrochimique de se disperser dans l'eau.

34. Sachet selon la revendication 33, dans lequel la couche de film soluble dans l'eau froide est un film choisi parmi le groupe comprenant l'alcool polyvinylique, le polyoxyéthylène et des combinaisons de ceux-ci.

35. Sachet selon la revendication 33, dans lequel la couche de film soluble dans l'eau froide est un film choisi parmi le groupe comprenant l'alcool polyvinylique, le polyoxyéthylène, les dérivés de cellulose choisis parmi le groupe comprenant la méthyl-cellulose, la méthylhydroxyéthylcellulose, la méthylhydroxypropyl-cellulose, l'hydroxypropyl-cellulose, la cellulose, le monoacétate de cellulose, les dérivés de cellulose modifiés de façon hydrophobe, le polyacrylate de sodium, l'acide polylactique, les éthers d'acide lactique, les esters d'alcool polyvinylique, les esters de cellulose, le carragheen, la pectine, des combinaisons de ceux-ci et des combinaisons de ceux-ci avec de l'amidon.

36. Sachet selon la revendication 33, dans lequel la couche barrière interne a une épaisseur comprise entre 0,25 micron et 15 microns.

37. Sachet selon la revendication 33, dans lequel la couche de film soluble dans l'eau a une épaisseur comprise entre environ 12 microns et 200 microns.

38. Sachet selon la revendication 33, dans lequel la couche barrière interne est un film de polymère qui ne se dissout pas dans l'eau à des températures au-dessus de 5°C.

39. Sachet selon la revendication 38, dans lequel la couche barrière interne est choisie parmi le groupe comprenant les dérivés de cellulose dans lesquels le degré de substitution est suffisant pour empêcher une solubilité au-dessus de 5°C comme l'acétate-lactate de cellulose, le lactate de cellulose, la méthylhydroxybutyl-cellulose et les dérivés de cellulose modifiés de façon hydrophobe.

40. Sachet selon la revendication 33, dans lequel la couche barrière interne est un film polymère qui ne se dissout pas dans l'eau à des températures en dessous de 50°C.

41. Sachet selon la revendication 40, dans lequel la couche barrière interne comprend entre 97 et 99,99 % d'alcool polyvinylique hydrolysé.

42. Sachet selon la revendication 34, dans lequel la couche barrière interne est une couche de polymère qui se dissout dans l'eau mais qui est essentiellement moins réactive que l'alcool polyvinylique ou le polyoxyéthylène par rapport à la composition agrochimique qui y est contenue.

43. Sachet selon la revendication 42, dans lequel la couche de polymère barrière interne qui se dissout dans l'eau est moins réactive que l'alcool polyvinylique ou le polyoxyéthylène à la plupart des compositions agrochimiques et est choisie parmi le groupe comprenant les dérivés de cellulose qui ont un degré de substitution (DS) ou des moles de substitution (MS) fournissant la solubilité dans la gamme d'environ 5°C à environ 60°C.

44. Sachet selon la revendication 43, dans lequel ledit dérivé de cellulose de la couche de polymère barrière interne est choisi parmi le groupe comprenant la méthyl-cellulose, la méthylhydroxyéthyl-cellulose, la méthylhydroxypropyl-cellulose, la méthyléthyl-cellulose, la méthylhydroxybutyl-cellulose, l'hydroxypropyl-cellulose, la carboxyméthyl-cellulose, les dérivés de cellulose modifiés de façon hydrophobe, le monoacétate de cellulose, l'acétate-lactate de cellulose, le lactate de cellulose, la gomme de karaya, la gomme de guar, le carragheen, la pectine, la gomme adraganthe, l'alginate de sodium, la gomme arabique, la gomme de xanthane et leurs combinaisons.

45. Système d'emballage selon la revendication 33, dans lequel la couche barrière interne se désintègre dans l'eau.

46. Système d'emballage selon la revendication 45, dans lequel la couche barrière interne qui se désintègre dans l'eau est choisie parmi le groupe comprenant les polymères d'acides acryliques solubles, les polymères d'esters acryliques solubles, les copolymères d'acides acryliques solubles, les copolymères d'esters acryliques solubles, les copolymères solubles d'acides et d'esters acryliques, les alcools polyvinyliques réticulés, les dérivés de cellulose réticulés, l'éthyl-cellulose, la nitrocellulose, le butyrate de cellulose, l'acétate-butyrate de cellulose, les dérivés d'éthylène - alcool vinylique, d'éthylène - acétate de vinyle, le chlorure de polyvinylidène, les cires solubles dans les alcalis et les polyuréthanes.

47. Système d'emballage selon la revendication 33, dans lequel la couche barrière interne est stratifiée à la couche de film externe soluble dans l'eau.

48. Système d'emballage selon la revendication 33, dans lequel la couche barrière interne est coextrudée avec la couche de film externe soluble dans l'eau.

49. Système d'emballage selon la revendication 33, dans lequel la couche barrière interne est enrobée sur la couche de film externe soluble dans l'eau.
